# EUROPÄISCHE PATENTSCHRIFT

(11) **EP 2 342 608 B1**
(45) Veröffentlichungstag und Bekanntmachung des Hinweises auf die Patenterteilung: **01.10.2014**
(21) Anmeldenummer: 09743863.4
(22) Anmeldetag: 23.10.2009
(51) Int. Cl.: G05B 19/423, G05B 19/427, B25J 9/16

(54) **INDUSTRIEROBOTER UND VERFAHREN ZUM PROGRAMMIEREN EINES INDUSTRIEROBOTERS**
INDUSTRIAL ROBOT AND METHOD FOR PROGRAMMING AN INDUSTRIAL ROBOT
ROBOT INDUSTRIEL ET PROCÉDÉ DE PROGRAMMATION D UN ROBOT INDUSTRIEL

(30) Priorität: 31.10.2008 DE 102008043360
(43) Veröffentlichungstag der Anmeldung: 13.07.2011
(73) Patentinhaber: KUKA Roboter GmbH, 86165 Augsburg (DE)
(72) Erfinder: SEDLMAYER, Andreas, 82256 Fürstenfeldbruck (DE)
(74) Vertreter: Funk, Alexander Tobias
(86) Internationale Anmeldenummer: PCT/EP2009/007611
(87) Internationale Veröffentlichungsnummer: WO 2010/049101

(56) Entgegenhaltungen:
- EP-A1- 0 601 199
- EP-A1- 1 535 706
- EP-A2- 1 332 841
- DE-A1- 10 324 517
- DE-A1-102004 048 563
- JP-A- 61 040 612
- US-B1- 6 285 920

## Beschreibung

Die Erfindung betrifft ein Verfahren zum Programmieren eines Industrieroboters und einen Industrieroboter.

Industrieroboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind.

Unter Verfahren zum Programmieren des Roboters (Programmierverfahren), versteht man das planmäßige Vorgehen zur Erzeugung von Anwenderprogrammen.

Ein allgemein bekanntes Programmierverfahren ist die sogenannte Teach-In-Programmierung, bei der eine Bewegungsinformation für den Roboter durch Anfahren gewünschter Raumpunkte mit Hilfe einer geeigneten Vorrichtung, beispielsweise eines Programmierhandgerätes oder eines Bedienfeldes, und Übernahme dieser Raumpunkte in die Robotersteuerung erstellt wird.

Eine weitere Art der Programmierung ist das sogenannte Play-Back Verfahren, bei dem die Programmierung eines Arbeitsvorgangs durch manuelles Führen des Roboters entlang einer gewünschten Raumkurve erfolgt. Dabei werden die Lage-Ist Werte, d.h. die Achsstellungen oder die TCP-Position (Tool Center Point Position) des Roboters in einem definierten Zeit- oder Wegraster in das Anwenderprogramm übernommen.

Wird jedoch der Roboter programmiert, indem dieser z.B. in der Nähe eines Werkstücks oder an der Oberfläche des Werkstücks geführt wird, dann kann der Roboter während des Programmierens das Werkstück beschädigen, wenn er beispielsweise das Werkstück berührt und auf dieses eine relativ große Kraft ausübt.

Die US 6,285,920 B1 offenbart ein Verfahren zum Programmieren eines Industrieroboters, bei dem der Roboter manuell geführt und der Abstand zwischen dem Industrieroboter und einem Objekt ermittelt wird.

Die DE 1 535 706 A1 offenbart ein Verfahren zum Programmieren eines Roboters, bei dem die Geschwindigkeit der Bewegung des Roboters in Abhängigkeit der Position des Programmierers und der Position des Roboters auf eine reduzierte Geschwindigkeit begrenzt wird, um es gegebenenfalls dem Programmierer zu ermöglichen, sich vor dem Roboter in Sicherheit zu bringen.

Die EP 0 601 199 A1 offenbart eine Kollisionsvermeidung zweier Roboter.

Aufgabe der Erfindung ist es, ein Verfahren zum Programmieren eines Industrieroboters anzugeben, das eine Gefahr eines Zusammenstoßes des Industrieroboters mit einem Objekt während des manuellen Führens des Industrieroboters zumindest verringert.

Eine weitere Aufgabe der Erfindung ist es, einen Industrieroboter anzugeben, der derart eingerichtet ist, eine Gefahr eines Zusammenstoßes des Industrieroboters mit einem Objekt während eines manuellen Führens des Industrieroboters zumindest zu verringern.

Die Aufgabe der Erfindung wird gelöst durch ein Verfahren zum Programmieren eines Industrieroboters gemäß dem Anspruch 1.

Die Aufgabe der Erfindung wird auch gelöst durch einen Industrieroboter gemäß dem Anspruch 7.

Industrieroboter können kraftgeregelt ausgeführt sein. Es sind jedoch keine Kraftregler bekannt, die einen insbesondere relativ schweren Industrieroboter mit Kraftmomentensensor am Flansch mit beliebig hoher, beim Handführen mit ca. 30 cm/s Geschwindigkeit mit einer Werkzeugspitze (Tool Center Point, TCP) eines am Flansch des Industrieroboters befestigten Werkstücks an ein Objekt, beispielsweise an ein Werkstück bewegen lassen, ohne bei einer Kollision mit dem Objekt das Objekt oder den Industrieroboter zu beschädigen und relativ hohe Kräfte bei der Fahrt in den Kontaktpunkt auszulösen. Abhängig ist dies von der effektiven bewegten Masse des Manipulators bzw. Roboterarms des Industrieroboters.

Physikalisch wird im Zeitpunkt des Kontaktes zwischen Industrieroboter und dem Objekt die kinetische Energie des gegebenenfalls relativ schweren Roboterarmes am feststehenden Werkstück bzw. Objekt abgebaut. Die Energie wird größtenteils in plastische und elastische Deformationsenergie umgewandelt. Dabei muss sich der Roboterarm und/oder das Werkstück innerhalb weniger Millisekunden verformen, denn die Deformationsenergie wird impulsartig umgewandelt. Beispielsweise dauert der Impuls eines Faustschlages auf einen Tisch ca. 3ms. Wenn ein relativ steifer Roboterarm oder ein an einem Roboter montiertes steifes Werkzeug an ein metallenes Werkstück prallt, hat dies einen noch kürzeren Impuls. Ursache dafür ist die relativ hohe Steifigkeit des Manipulators aus den Robotergelenken in Verbindung mit dem eingespannten Werkstück.

Wenn unmittelbar nach dem Impuls noch Kontakt besteht, wird übrige elastische Deformationsenergie durch eine Rückbewegung des Manipulators abgebaut, bis keine Kontaktkräfte mehr vorhanden sind. Dieser Abbau der elastischen Deformationsenergie wird jedoch beim Industrieroboter gehindert wegen des relativ geringen rücktreibenden Getriebewirkungsgrads der Getriebe des Roboterarms, entsprechend einer relativ hohen Reibung, Selbsthemmung, Trägheit. Die Trägheit einer Antriebswelle wird um den Faktor der Getriebeübersetzung (z.B. 1:185) auf die Abtriebsseite multipliziert. Es dauert aus diesem Grund mehrere Millisekunden (wesentlich länger als der Impuls), bis der Antrieb bzw. dessen Motor die übrige elastische Deformationsenergie abführen kann.

Der Abbau der übrigen elastischen Deformationsenergie kann durch eine aktive Reglerkomponente unterstützt werden. Jedoch sind keine Regler bekannt, die sogar über einen Getriebeabtriebseitig erfassenden Sensor (Kraftsensor, Drehmomentensensor) in so kurzer Zeit einen derartigen Impuls über den Antriebsstrang eines Industrieroboters aus regeln können. Grund dafür ist die elektromechanische Zeitkonstante des Antriebs (Motor-Getriebe-Strecke). Eine schnelle Abtastrate z.B. 0,5ms eines gegebenenfalls diskret bzw. digital arbeitenden Kraftsensors hilft hier nicht weiter.

Um die relativ hohen Kräfte beim Anprall (englisch: Impact) zu reduzieren, gibt es so genannte nachgiebige Kraftmomentensensoren. Diese Sensoren weisen beispielsweise eine Nachgiebigkeit von 1,4 mm bei 300N Kraft auf und sind begrenzt auf 1,4 mm Federweg. Diese Nachgiebigkeit ist jedoch viel zu gering für die zum Handführen eines Industrieroboters normalerweise geforderten Geschwindigkeiten.

Im manchen Anwendungen wird zwar angestrebt, den Roboterarm so leicht wie möglich zu konstruieren, um die aus der Masse des Roboterarms resultierende kinetische Energie zu verringern oder gar zu minimieren. Eine weitere Maßnahme ist, gegebenenfalls Getriebe des Industrieroboters durch Direktantriebe zu ersetzen. Dadurch ist der rücktreibende Wirkungsgrad größer und der Antriebsstrang kann schneller und mehr Energie abführen.

Erfindungsgemäß wird, um die Gefahr eines Kollidierens des Industrieroboters mit dem Objekt zumindest zu verringern, der Abstand zwischen dem Industrieroboter und dem Objekt ermittelt. Dies kann durch wenigstens eine beispielsweise an einer geeigneten Stelle am Industrieroboter angeordnete Abstandsmessvorrichtung erreicht werden. Geeignete Abstandsmessvorrichtungen (Näherungssensoren) sind u. A. folgende Sensoren: Ultraschallsensor, gegebenenfalls mit Analogausgang, induktiver Näherungssensor, kapazitiver Näherungssensor, magnetischer Näherungssensor, Laserabstandssensor, konfokal-chromatische Wegsensor und Tastprobe.

Ultraschallsensoren weisen beispielsweise eine Tastweite von 13 mm bis 600 mm auf.

Ein induktiver Näherungssensor ist ein Sensor, der relativ sicher und berührungslos metallische Objekte erfasst. Reichweiten von induktiven Näherungssensoren liegen im Bereich von 4mm bis 40mm und können auch Analogausgänge aufweisen.

Kapazitive Näherungssensoren messen Abstände z.B. im Bereich von 8mm bis 25mm.

Ein Laserabstandssensor könnte alternativ als Näherungssensor für die Teachaufgabe eingesetzt werden. Sensoren mit dem Messprinzip Laser-Linientriangulation haben eine rechteckige Bauform, die bei bestimmten Teachwerkzeugen störend sein kann. Außerdem würde dieser Sensor nur einen Abstandsmesswert (Freiheitsgrad) in Stoßrichtung der Teachspitze liefern. Kontakt seitlich zur Teachspitze, wie er z.B. beim Teachen in Werkstückecken unvermeidbar ist, kann nicht gemessen werden.

Tastproben z.B. mit Dehnungsmessstreifen werden z.B. für Messaufgaben am TCP von CNC Maschinen eingesetzt. die Tastprobe kann die Auslenkung des Taststiftes in drei Freiheitsgraden mit Dehnungsmessstreifen messen. Der Sensor hat gegebenenfalls eine Schnittstelle, um die Sensorinformation zyklisch einem Regler zu übertragen. Die maximale Auslenkung beträgt etwa 12 bis 22mm am Tastkopf.

Ferner werden erfindungsgemäß die Antriebe des Industrieroboters derart angesteuert, so dass sich der Industrieroboter nur mit einer vom ermittelten Abstand zum Objekt abhängigen Maximalgeschwindigkeit in Richtung des Objekts manuell bewegen lässt.

Die Raumkurve kann z.B. entlang und/oder in der Nähe einer Oberfläche des Objekts verlaufen.

Für das Programmieren des erfindungsgemäßen Industrieroboters werden gegebenenfalls die Lage-Ist-Werten des Industrieoboters während seines Bewegens entlang der Raumkurve gespeichert.

Um zu erreichen, dass sich der erfindungsgemäße Industrieroboter gegebenenfalls nur mit höchstens der abstandsabhängigen Maximalgeschwindigkeit insbesondere in Richtung des Objekts bewegen lässt, kann es vorzugsweise vorgesehen sein, eine Kraft und/oder ein Drehmoment mittels der Antriebe aufgrund des Ansteuern der Antriebe zu erzeugen, so dass sich der Industrieroboter nur mit einer vom ermittelten Abstand zum Objekt abhängigen Maximalgeschwindigkeit manuell bewegen lässt. Die erzeugte Kraft bzw. das erzeugte Drehmoment wirkt gegen die Bewegungsrichtung, mit der der Industrieroboter manuell bewegt wird.

Nach dem erfindungsgemäßen Verfahren werden die Antriebe des Industrieroboters derart angesteuert, so dass sich der Industrieroboter nur mit einer vom ermittelten Abstand zum Objekt abhängigen Maximalgeschwindigkeit in Richtung zum Objekt manuell bewegen lässt. Somit ist es möglich, dass sich der Industrieroboter mit einer höheren als der Maximalgeschwindigkeit entlang der Oberfläche des Objekts, jedoch nur maximal mit der Maximalgeschwindigkeit in Richtung der Oberfläche des Objekts bewegen lässt.

Gemäß einer Ausführungsform des erfindungsgemäßen Verfahrens werden die Antriebe des Industrieroboters derart angesteuert, sodass diese die Bewegung des Industrieroboters auf die Maximalgeschwindigkeit abbremsen. Diese Variante ist z.B. dann vorteilhaft, wenn sich der erfindungsgemäße Industrieroboter bis zu einem Mindestabstand zum Objekt mit im Wesentlichen beliebiger Geschwindigkeit bewegen lässt und nur beim Unterschreiten des Mindestabstands derart betrieben wird, so dass er sich nur mit der abstandsabhängigen Maximalgeschwindigkeit bewegen lässt.

Nach einer weiteren Ausführungsform des erfindungsgemäßen Verfahrens werden die Antriebe des Industrieroboters derart angesteuert, so dass diese die Bewegung des Industrieroboters vollständig abbremsen, wenn der Abstand im Wesentlichen gleich null ist. Somit wird die Gefahr einer Kollision des Industrieroboters mit dem Objekt wenn nicht gar verhindert, so jedoch zumindest vermindert.

Gemäß einer Variante des erfindungsgemäßen Verfahrens werden die Antriebe des Industrieroboters bei einem Abstand gleich null derart angesteuert, so dass sich der Industrieroboter nicht mehr in Richtung Objekt manuell bewegen lässt. Somit verhindert der erfindungsgemäße Industrieroboter eine manuelle Bewegung in Richtung Objekt, wenn der Industrieroboter das Objekt berührt. Diese Variante vermindert oder verhindert sogar ebenfalls eine Gefahr einer Kollision des Industrieroboters mit dem Objekt.

Nach Varianten des erfindungsgemäßen Verfahrens wird der Industrieroboter mittels manuellen Führens und/oder mittels eines manuell bedienbaren Eingabegerätes manuell bewegt. Ein manuelles Eingabegerät ist z.B. ein Programmierhandgerät.

Nach einer weiteren Variante des erfindungsgemäßen Verfahrens wird der Industrieroboter mittels eines insbesondere an einem Flansch des Industrieroboters befestigten Teachwerkzeugs manuell bewegt. Dann kann es vorgesehen sein, dass der Abstand zwischen dem Objekt und dem Industrieroboter mittels einer am Teachwerkzeug angeordneten Abstandsmessvorrichtung ermittelt wird. Außerdem kann es vorgesehen sein, das der Abstand zwischen dem Industrieroboter und dem Objekt der Abstand zwischen dem Teachwerkzeug und dem Objekt, insbesondere zwischen einer Tastspitze des Teachwerkzeugs und dem Objekt ist. Dann ergeben sich gute Vorraussetzungen dafür, dass während des Programmierens des Industrieroboters im Rahmen des manuellen Bewegens das Teachwerkzeug nicht versehentlich mit dem Objekt zusammen stößt.

Nach einer Variante des erfindungsgemäßen Verfahrens ändert sich die Haptik des manuell bedienbaren Eingabegerätes abhängig vom Abstand zwischen dem Objekt und dem Industrieroboter. Dies kann z.B. derart erreicht werden, so dass auf das Eingabegerät eine Abstandsabhängige Kraft wirkt, die insbesondere mit abnehmendem Abstand zum Objekt wächst. Dadurch erhält die das Eingabegerät bedienende Bedienperson eine Information über den Abstand zwischen Industrieroboter und Objekt über das Eingabegerät, wodurch ebenfalls die Gefahr einer Kollision mit dem Objekt verringert wird.

Je nach Ausführungsform des erfindungsgemäßen Industrieroboters ist es möglich, dass eine Kontaktfahrt mit der Teachspitze mit dem Werkstück (Objekt) mit Handführgeschwindigkeit durch Sensorik (Abstandsmessvorrichtung) schadenfrei erfolgen kann. Dazu wird gegebenenfalls der Näherungssensor (Abstandsmessvorrichtung) an der Teachspitze angebracht. Der Näherungssensor detektiert beispielsweise etwa im Abstand von 10mm bis 30mm das Werkstück. Bei diesem Abstand bleibt genügend Zeit, um den Roboterarm des Industrieroboters gegebenenfalls sanft zu bremsen. Die Entfernungsmessgröße wird zur Bremsung und Begrenzung der Geschwindigkeit z.B. in einen Kraftregler des Industrieroboters eingezogen.

Außerdem kann gegebenenfalls je nach Entfernung zum Werkstück eine Kraft entgegen der Bewegungsrichtung durch einen Steifigkeitsregler generiert werden. Der Kraftverlauf kann z.B. einer simulierten Feder entsprechen, die der Bedienperson das Gefühl gibt, (Haptik über den Handgriff) vom Werkstück "weggedrückt" zu werden

Ausführungsbeispiele der Erfindung sind exemplarisch in den beigefügten schematischen Zeichnungen dargestellt. Es zeigen:
- Fig. 1: einen Industrieroboter und
- Fig. 2: ein das Programmieren des Industrieroboters der Fig. 1 veranschaulichendes Flussdiagramm.

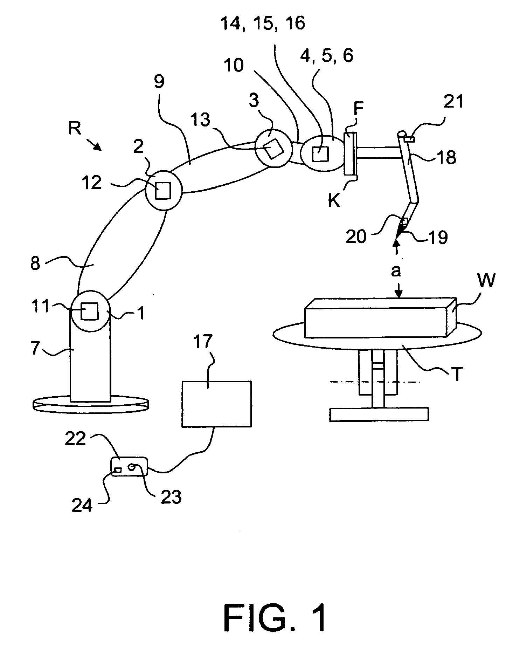

Die Figur 1 zeigt einen Roboter R mit mehreren Achsen 1-6, mehreren Hebeln 7-10 und einem Flansch F.

Jede der Achsen 1-6 kann im Falle des vorliegenden Ausführungsbeispiels mit einem elektrischen Antrieb 11-16 bewegt werden, wobei die Antriebe 11-16 in nicht dargestellter Weise mit einem Steuerrechner 17 elektrisch verbunden sind, so dass der Steuerrechner 17 bzw. ein auf dem Steuerrechner 17 laufendes Rechnerprogramm die Antriebe 11-16 derart ansteuern kann, so dass diese eine Kraft bzw. ein Drehmoment auf die relevanten Achsen 1-6 ausüben können. Die Antriebe 11-16 weisen beispielsweise elektrische Motoren, eine Leistungselektronik und gegebenenfalls Getriebe auf.

Im Falle des vorliegenden Ausführungsbeispiels ist am Flansch F ein Teachwerkzeug 18 befestigt. Das Teachwerkzeug 18 ist beispielsweise ein Schweißbrenner und weist eine Tastspitze 19 auf. Das Teachwerkzeug 18 ist vorgesehen, den Roboter R manuell zu führen, um ihn zu programmieren. An oder in der Nähe der Tastspitze 19 ist ein Abstandssensor 20 befestigt. Es ist aber auch möglich, dass der Abstandssensor 20 in die Tastspitze 19 integriert ist. Der Abstandssensor 20 kann u. A. auf folgende Messprinzipien beruhen bzw. einer der folgenden Abstandssensoren sein: Ultraschallsensor, induktiver Näherungssensor, kapazitiver Näherungssensor, magnetischer Näherungssensor, Laserabstandssensor, konfokal-chromatischer Wegsensor oder Tastprobe. Der Abstandssensor 20 ist vorgesehen, den Abstand a zwischen einem Objekt bzw. dessen Oberfläche, im Falle des vorliegenden Ausführungsbeispiels eines auf einem Tisch T liegenden Werkstücks W, und der Tastspitze 19 zu ermitteln.

Im Falle des vorliegenden Ausführungsbeispiels ist zwischen dem Flansch F und dem Teachwerkzeug 18 am Industrieroboter 1 noch ein Kraft-Momenten Sensor K angeordnet, der Kräfte und Drehmomente in sechs Freiheitsgrade erfasst, die durch Kontakt des Teachwerkzeugs 18 mit der Umgebung auf den Flansch F wirken. Diese Kräfte und Momente führen zu einer tanslatorischen und rotatorischen Bewegung des Flansches F bzw. des sogenannten Tool Center Points (TCP).

Im Falle des vorliegenden Ausführungsbeispiels ist der Roboter R dafür vorgesehen, ein Werkstück ähnlich dem Werkstück W mit einem nicht näher dargestellten Werkzeug, das im Betrieb des Roboters R anstelle des Teachwerkzeugs 18 am Flansch F befestigt ist, zu bearbeiten.

Damit der Roboter R mittels des Werkzeugs das Werkstück in gewünschter Weise bearbeiten kann, muss der Roboter R zunächst derart programmiert werden, dass der Steuerrechner 17 im Betreib des Roboters R die Antriebe 11-16 derart ansteuern kann, um den Flansch F bzw. den Tool Center Point (TCP) des Roboters R in gewünschter Weise zu bewegen.

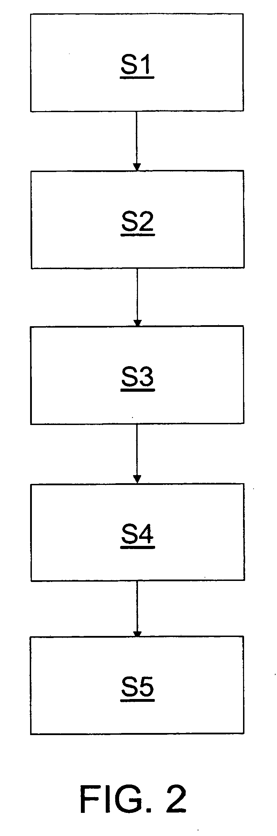

Die Programmierung des Steuerrechners 17 erfolgt im Falle des vorliegenden Ausführungsbeispiels wie nachstehend beschrieben und ist mit einem in der Figur 2 gezeigten Flussdiagramm veranschaulicht:
Zunächst wird der Roboter R derart durch manuelles Führen manuell bewegt, dass sich die Tastspitze 19 des Teachwerkzeugs 18 in Richtung der Oberfläche des bereits bearbeiteten Werkstücks W bewegt, bis die Tastspitze 19 die Oberfläche des Werkstücks W berührt oder fast berührt. Dies wird z.B. realisiert, indem eine nicht näher dargestellte Bedienperson am Teachwerzeug 18 zieht oder drückt. Während des manuellen Führens ermittelt der Abstandssensor 20 den Abstand a zwischen der Oberfläche des Werkstücks W und der Tastspitze 19, Schritt S1 des Flussdiagramms.

Der Abstandssensor 20 ist in nicht dargestellter Weise mit dem Steuerrechner 17 verbunden und übermittelt diesem dem Abstand a zugeordnete elektrische Signale. Auf dem Steuerrechner 17 läuft ein Rechenprogramm, mittels dem der Steuerrechner 17 den Abstand a auswertet und in Abhängigkeit vom Abstand a die Antriebe 11-16 derart ansteuert, so dass diese vom Abstand a abhängige Kräfte bzw. Drehmomente ausüben, die im Falle des vorliegenden Ausführungsbeispiels der manuellen Bewegungsrichtung der Tastspitze 20 entgegen gerichtet sind, Schritt S2 des Flussdiagramms.

Im Falle des vorliegenden Ausführungsbeispiels sind die von den Antrieben 11-16 aufgebrachten Kräfte bzw. Drehmomente derart vom Steuerrechner 17 geregelt, so dass sich der Roboter R nur mit einer vom Abstand a abhängigen Maximalkraft in Richtung der Oberfläche des Werkstücks W manuell bewegen lässt, Schritt S3 des Flussdiagramms.

Im Falle des vorliegenden Ausführungsbeispiels ist es ferner vorgesehen, dass sich der Roboter R im Wesentlichen mit beliebiger Geschwindigkeit bewegen lässt, so lange der Abstand a zwischen der Tastspitze 19 und der Oberfläche des Werkstücks W keinen Mindestabstand unterschreitet. Wird der Mindestabstand unterschritten, dann steuert der Steuerrechner 17 die Antriebe 11-16 derart an, so dass diese die Gegenkräfte bzw. Gegendrehmomente ausüben, so dass der Roboter R nur mit einer vorgegebenen Maximalgeschwindigkeit weiter in Richtung des Werkstücks W manuell geführt werden kann. Gegebenenfalls werden die Antriebe 11-16 derart angesteuert, so dass sie die aktuelle Geschwindigkeit der manuellen Bewegung abbremsen.

Im Falle des vorliegenden Ausführungsbeispiels kann es auch vorgesehen sein, dass die maximal erlaubte Geschwindigkeit, mit der die Tastspitze 19 in Richtung des Werkstücks W bewegt werden kann, mit kleinerem Abstand a abnimmt. Insbesondere ist es im Falle des vorliegenden Ausführungsbeispiels vorgesehen, dass der Steuerrechner 17 automatisch die manuelle Bewegung abbremst, so dass der Roboter R seine Bewegung vollständig abgebremst hat, wenn die Tastspitze 19 die Oberfläche des Werkstücks W berührt.

Für das Programmieren des Roboters R wird dieser mittels des Teachwerkszeugs 18 derart manuell geführt, dass sich die Tastspitze 19 auf einer Raumkurve bewegt, auf der sich im Betrieb des Roboters R das Werkzeug bzw. der TCP nach der Programmierung bewegen soll.

Im Falle des vorliegenden Ausführungsbeispiels verläuft diese Raumkurve auf der Oberfläche des bearbeiteten Werkstücks W. Des Weiteren ermittelt während des manuellen Bewegens des Roboters R ständig der Abstandssensor 20 den Abstand a zwischen der Tastspitze 19 und der Oberfläche des Werkstücks W, damit der Steuerrechner 17 gegebenenfalls die Antriebe 11-16 derart ansteuern kann, dass der Roboter R nur mit der vom Abstand a abhängigen Maximalgeschwindigkeit bewegt werden kann, Schritt S4 des Flussdiagramms.

Um einzelne Ist-Lage-Werte während des manuellen Führens des Roboters R zu speichern, weist im Falle des vorliegenden Ausführungsbeispiels das Teachwerkzeug 18 eine Eingabetaste 21 auf, die in nicht dargestellter Weise mit dem Steuerrechner 17 verbunden ist, um bei Betätigung die aktuelle Ist-Lage des Roboters R, d.h. die Ist-Lage dessen TCP bzw. dessen Flansch F zu speichern, Schritt S5 des Flussdiagramms. Aufgrund der gespeicherten Ist-Lage-Werte kann der Steüerrechner 17 das obenstehend genannte Rechenprogramm in allgemein bekannter Weise erstellen, aufgrund dessen später der Steuerrechner 17 die Antriebe 11-16 ansteuern kann, damit das Werkzeug die gewünschte Bewegung automatisch durchführt. Alternativ kann es auch vorgesehen sein, dass die Ist-Lage-Werte automatisch in vorbestimmten Zeitabständen, z.B. alle 10 ms gespeichert werden.

Alternativ kann es auch vorgesehen sein, dass der Roboter R manuell z.B. mittels eines mit dem Steuerrechner 17 verbundenen Programmierhandgerätes 22 bewegt wird.

Das Programmierhandgerät 22 weist im Falle des vorliegenden Ausführungsbeispiels einen Joystick 23 und eine Eingabetaste 24 auf. Mittels des Joysticks 23 kann der Roboter R im Handbetrieb manuell bewegt werden, um z.B. das Teachwerkzeug 18 zu bewegen. Während des manuellen Bewegens ermittelt der Abstandssensor 20 den Abstand a zwischen der Tastspitze 19 und der Oberfläche des Werkstücks W wie obenstehend beschrieben, damit der Steuerrechner 17 die Antriebe 11-16 wie obenstehend beschrieben derart ansteuert, so dass sich der Roboter R nur mit der vom Abstand a abhängigen Maximalgeschwindigkeit bewegen lässt und gegebenenfalls eine Bewegung des Roboters R abbremst.

Im Falle des vorliegenden Ausführungsbeispiels ist es noch vorgesehen, dass der Steuerrechner 17 die Haptik des Programmierhandgerätes 22 abhängig vom Abstand a ändert. Um dies zu erreichen, ist das Programmierhandgerät 22 derart eingerichtet, eine Kraft oder ein Drehmoment auf den Joystick 23 auszuüben, die sich mit änderndem Abstand a ändert. Insbesondere ist es vorgesehen, dass diese Kraft bzw. dieses Drehmoment mit kleiner werdendem Abstand a größer wird.

Um die einzelne Ist-Lage-Werte während des manuellen Bewegens des Roboters R zu speichern, kann die Bedienperson die Eingabetaste 24 betätigen.

## Patentansprüche

1. Verfahren zum Programmieren eines Industrieroboters, aufweisend folgende Verfahrensschritte:
- manuelles Führen eines Antriebe (11-16) aufweisenden Industrieroboters (R) entlang einer Raumkurve, die entlang einer Oberfläche eines Objekts (W) verläuft, und
- Ermitteln eines Abstands (a) zwischen dem Industrieroboter (R) und dem Objekt (W),
**gekennzeichnet durch** Ansteuern der Antriebe (11-16) des Industrieroboters (R) derart, so dass sich der Industrieroboter (R) nur mit einer vom ermittelten Abstand (a) zum Objekt (W) abhängigen Maximalgeschwindigkeit in Richtung zum Objekt (W), jedoch entlang der Oberfläche mit einer höheren Geschwindigkeit als der Maximalgeschwindigkeit manuell führen lässt.

2. Verfahren nach Anspruch 1, aufweisend manuelles Führen des Industrieroboters (R) mittels eines an einem Flansch (F) des Industrieroboters (R) befestigten Teachwerkzeugs (18).

3. Verfahren nach Anspruch 2, aufweisend Ermitteln des Abstands (a) zwischen dem Objekt (W) und dem Industrieroboters (R) mittels einer am Teachwerkzeug (18) angeordneten Abstandsmessvorrichtung (20).

4. Verfahren nach Anspruch 2 oder 3, bei dem der Abstand (a) zwischen dem Industrieroboter (R) und dem Objekt (W) der Abstand (a) zwischen dem Teachwerkzeug (18) und dem Objekt (W), insbesondere zwischen einer Tastspitze (19) des Teachwerkzeugs (18) und dem Objekt (W) ist.

5. Verfahren nach einem der Ansprüche 1 bis 4, aufweisend Ansteuern der Antriebe (11-16) des Industrieroboters (R) derart, so dass sich der Industrieroboter (R) in Richtung zum Objekt (W) nicht mehr manuell führen lässt, wenn der Abstand (a) gleich null ist.

6. Verfahren nach einem der Ansprüche 1 bis 5, aufweisend Ansteuern der Antriebe (11-16) des Industrieroboters (R) derart, so dass diese die Bewegung des Industrieroboters (R) vollständig abbremsen, wenn der Abstand (a) im Wesentlichen gleich null ist.

7. Industrieroboter, aufweisend eine Mehrzahl von Antrieben (11-16), eine Mehrzahl von von den Antrieben (11-16) bewegbarer Achsen (1-6), und eine Abstandsmessvorrichtung (20), die eingerichtet ist, einen Abstand (a) zwischen dem Industrieroboter (R) und einem Objekt (W) zu ermitteln, wobei der Industrieroboter (R) vorgesehen ist, entlang einer Raumkurve manuell geführt zu werden, die entlang einer Oberfläche des Objekts (W) verläuft, **gekennzeichnet durch** eine zum Steuern der Antriebe (11-16) vorgesehene Steuerungsvorrichtung (17), die automatisch die Antriebe (11-16) derart ansteuert, so dass sich der Industrieroboter (R) nur mit einer vom ermittelten Abstand (a) zum Objekt (W) abhängigen Maximalgeschwindigkeit in Richtung zum Objekt (W), jedoch entlang der Oberfläche mit einer höheren als der Maximalgeschwindigkeit manuell führen lässt.

8. Industrieroboter nach Anspruch 7, aufweisend ein an einem Flansch (F) des Industrieroboters (R) befestigtes Teachwerkzeug (18), mittels dem sich der Industrieroboter (R) manuell führen lässt.

9. Industrieroboter nach Anspruch 8, dessen Abstandsmessvorrichtung (20) eingerichtet ist, den Abstand (a) zwischen dem Teachwerkzeug (18) und dem Objekt (W), insbesondere zwischen einer Tastspitze (19) des Teachwerkzeugs (18) und dem Objekt (W) als den Abstand (a) zwischen dem Industrieroboter (R) und dem Objekt (W) zu ermitteln.

10. Industrieroboter nach einem der Ansprüche 7 bis 9, dessen Steuerungsvorrichtung (17) eingerichtet ist, die Antriebe (11-16) derart anzusteuern, so dass der Industrieroboter (R) ein manuelles Führen in Richtung zum Objekt (W) verhindert, wenn der ermittelte Abstand (a) zum Objekt (W) gleich null ist.

11. Industrieroboter nach einem der Ansprüche 7 bis 10, dessen Steuerungsvorrichtung (17) eingerichtet ist, die Antriebe (11-16) derart anzusteuern, so dass diese die Bewegung des Industrieroboters (R) vollständig abbremsen, wenn der Abstand (a) im Wesentlichen gleich null ist.

## Claims

1. Method for programming an industrial robot comprising the following method steps:
- manually moving an industrial robot (R) comprising drives (11-16) along a three-dimensional curve which runs along a surface of an object (W) and
- determining a distance (a) between the industrial robot (R) and the object (W),
**characterised by** controlling the drives (11-16) of the industrial robot (R) such that the industrial robot (R) can be moved manually only at a maximum speed dependent on the determined distance (a) from the object (W) in the direction of the object (W), but along the surface at a higher speed than the maximum speed.

2. Method according to claim 1 comprising moving the industrial robot (R) manually by means of a teaching tool (18) secured onto a flange (F) of the industrial robot (R).

3. Method according to claim 2 comprising determining the distance (a) between the object (W) and the industrial robot (R) by means of a distance measuring device (20) arranged on the teaching tool (18).

4. Method according to claim 2 or 3, wherein the distance (a) between the industrial robot (R) and the object (W) is the distance (a) between the teaching tool (18) and the object (W), in particular between a sensor tip (19) of the teaching tool (18) and the object (W).

5. Method according to one of claims 1 to 4 comprising controlling the drives (11-16) of the industrial robot (R) such that the industrial robot (R) can no longer be moved manually in the direction of the object (W) when the distance (a) is equal to zero.

6. Method according to one of claims 1 to 5 comprising controlling the drives (11-16) of the industrial robot (R) such that the latter fully brake the movement of the industrial robot (R) when the distance (a) is essentially equal to zero.

7. Industrial robot comprising a plurality of drives (11-16), a plurality of axes (1-6) moved by the drives (11-16) and a distance measuring device (20) which is set up to determine a distance (a) between the industrial robbot (R) and an object (W), the industrial robot (R) being provided to be guided manually along a three-dimensional curve which runs along a surface of the object (W), **characterised by** a control device (17) provided for controlling the drives (11-16) which controls the drives (11-16) automatically so that the industrial robot (R) can only be moved manually at a maximum speed dependent on the determined distance (a) from the object (W) in the direction of the object (W), but along the surface at a higher speed than the maximum speed.

8. Industrial robot according to claim 7 comprising a teaching tool (18) secured onto a flange (F) of the industrial robot (R), by means of which teaching tool the industrial robot (R) can be moved manually.

9. Industrial robot according to claim 8, the distance measuring device (20) of which is set up to determine the distance (a) between the teaching tool (18) and the object (W), in particular between a sensor tip (19) of the teaching tool (18) and the object (W), as the distance (a) between the industrial robot (R) and the object (W).

10. Industrial robot according to one of claims 7 to 9, the control device (17) of which is set up to control the drives (11-16) such that the industrial robot (R) prevents the manual movement in the direction of the object (W) when the determined distance (a) to the object (W) is equal to zero.

11. Industrial robot according to one of claims 7 to 10, the control device (17) of which is set up to control the drives (11-16) such that the latter fully brake the movement of the industrial robot (R) when the distance (a) is essentially equal to zero.

## Revendications

1. Procédé de programmation d'un robot industriel, présentant les étapes de procédé suivantes :
- déplacement manuel d'un robot industriel (R) présentant des mécanismes d'entraînement (11-16) le long d'une courbe dans l'espace qui s'étend le long d'une surface d'un objet (W), et
- détermination d'une distance (a) entre le robot industriel (R) et l'objet (W),
**caractérisé par** le pilotage des mécanismes d'entraînement (11-16) du robot industriel (R) de telle sorte que le robot industriel (R) ne peut être déplacé en direction de l'objet (W) qu'avec une vitesse maximum dépendant de la distance (a) déterminée par rapport à l'objet (W), mais toutefois le long de la surface avec une vitesse plus élevée que la vitesse maximum.

2. Procédé selon la revendication 1, présente un déplacement manuel du robot industriel (R) au moyen d'un outil d'apprentissage (18) fixé sur une bride (F) du robot industriel (R).

3. Procédé selon la revendication 2, présentant la détermination de la distance (a) entre l'objet (W) et le robot industriel (R) au moyen d'un dispositif de mesure de distance (20) agencé sur l'outil d'apprentissage (18).

4. Procédé selon la revendication 2 ou 3, dans lequel la distance (a) entre le robot industriel (R) et l'objet (W) est la distance (a) entre l'outil d'apprentissage (18) et l'objet (W), en particulier entre une pointe de palpage (19) de l'outil d'apprentissage (18) et l'objet (W).

5. Procédé selon l'une des revendications 1 à 4, présentant le pilotage des mécanismes d'entraînement (11-16) du robot industriel (R) de telle sorte que le robot industriel (R) ne peut plus être déplacé manuellement en direction de l'objet (W) lorsque la distance (a) est égale à zéro.

6. Procédé selon l'une des revendications 1 à 5, présentant le pilotage des mécanismes d'entraînement (11-16) du robot industriel (R) de telle sorte que ceux-ci freinent complètement le déplacement du robot industriel (R) lorsque la distance (a) est sensiblement égale à zéro.

7. Robot industriel présentant une multitude de mécanismes d'entraînement (11-16), une multitude d'axes (1-6) susceptibles d'être mus par les mécanismes d'entraînement (11-16), et un dispositif de mesure de distance (20) qui est adapté pour déterminer une distance (a) entre le robot industriel (R) et un objet (W), le robot industriel (R) étant prévu pour être déplacé manuellement le long d'une courbe dans l'espace qui s'étend le long d'une surface de l'objet (W), **caractérisé par** un dispositif de commande (17) prévu pour la commande des mécanismes d'entraînement (11-16), lequel pilote automatiquement les mécanismes d'entraînement (11-16) de telle sorte que le robot industriel (R) ne peut être déplacé en direction de l'objet (W) qu'avec une vitesse maximum dépendant de la distance (a) déterminée par rapport à l'objet (W) en direction de l'objet (W), mais toutefois le long de la surface avec une vitesse plus élevée que la vitesse maximum.

8. Robot industriel selon la revendication 7, présentant un outil d'apprentissage (18) fixé sur une bride du robot industriel (R), au moyen duquel le robot industriel (R) peut être déplacé manuellement.

9. Robot industriel selon la revendication 8, dont le dispositif de mesure de distance (20) est adapté pour déterminer la distance (a) entre l'outil d'apprentissage (18) et l'objet (W), en particulier entre une pointe de palpage (19) de l'outil d'apprentissage (18) et l'objet (W) en tant que la distance (a) entre l'outil d'apprentissage (18) et l'objet (W).

10. Robot industriel selon l'une des revendications 7 à 9, dont le dispositif de commande (17) est adapté pour piloter les mécanismes d'entraînement (11-16) de telle sorte que le robot industriel (R) empêche un déplacement manuel en direction de l'objet (W) lorsque la distance (a) déterminée vers l'objet (W) est égal à zéro.

11. Robot industriel selon l'une des revendications 7 à 10, dont le dispositif de commande (17) est adapté pour piloter les mécanismes d'entraînement (11-16) de telle sorte que ceux-ci freinent complètement le mouvement du robot industriel (R) lorsque la distance (a) est sensiblement égale à zéro.
